# EUROPÄISCHE PATENTANMELDUNG

(11) **EP 1 489 721 A2**
(43) Veröffentlichungstag der Anmeldung: **22.12.2004**
(21) Anmeldenummer: 04008978.1
(22) Anmeldetag: 15.04.2004
(51) Int. Cl.: H02K 1/27

(54) **Anordnung, insbesondere an einer elektrischen Maschine, zur Fixierung eines Magnetrings an einem Bauteil, vorzugsweise einem magnetischen Rückschluss**

(30) Priorität: 20.06.2003 DE 10327685
(71) Anmelder: ROBERT BOSCH GMBH, 70442 Stuttgart (DE)
(72) Erfinder: Evans, Steven-Andrew, 77813 Buehl (DE); Koenig, Tilo, 77830 Buehlertal (DE)

(57) **Zusammenfassung**

Es wird eine Anordnung, insbesondere an einer elektrischen Maschine (10), zur Fixierung mindestens eines Magnetringes (18) an einem Bauteil (20), vorzugsweise einem magnetischen Rückschluss, vorgeschlagen. Das Bauteil (20) hat eine axiale und radiale Erstreckung (a, r) sowie einen Umfang (24), an dem der mindestens eine Magnetring (18) vorzugsweise mittels einer dünnen nicht oder kaum elastischen Kleberschicht fixiert ist und mittels wenigstens eines Federelements (30) die unterschiedliche Wärmeausdehnung der verwendeten, unterschiedlichen Materialien kompensiert wird. Erfindungsgemäß ist vorgesehen, dass das wenigstens eine Federelement (30) mindestens eine sich in axialer Erstreckung (a) erstreckende, vom Umfang (24) des Bauteils (20) ausgehende Hinterschneidung umfasst, deren Querschnittsfläche zumindest teilweise quer zur radialen Erstreckung (r) des Bauteils (20) verläuft. Durch die mindestens eine Hinterschneidung ist ein Anlageabschnitt (32) am Umfang (24) des Bauteils (20) hinterschnitten, der federnd ist und auf dem der mindestens eine Magnetring (18) je nach Wärmeausdehnung wenigstens teilweise aufliegt.

## Beschreibung

### Stand der Technik

Die Erfindung geht aus von einer Anordnung, insbesondere an einer elektrischen Maschine, zur Fixierung eines Magnetrings an einem Bauteil, vorzugsweise einem magnetischen Rückschluss nach dem Oberbegriff des Patentanspruchs 1. Eine derartige Anordnung ist beispielsweise aus der JP 2000175388 A bekannt. Das dortige Bauteil weist eine axiale und eine radiale Erstreckung sowie einen Umfang auf. Der Magnet ist an dem Bauteil mittels eines Federelements fixiert, das auf den Magneten im wesentlichen eine Kraft in radialer Richtung ausübt. Das Federelement ist ein separates Bauteil, dessen Montage einen zusätzlichen Schritt in der Herstellung zur Folge hat.

### Vorteile der Erfindung

Die erfindungsgemäße Anordnung, insbesondere an einer elektrischen Maschine, zur Fixierung mindestens eines Magnetringes an einem Bauteil, vorzugsweise einem magnetischen Rückschluss, mit den kennzeichnenden Merkmalen des Patentanspruchs 1 hat demgegenüber den Vorteil, dass der mindestens eine Magnetring unter Ausgleich verschiedener Wärmeausdehnungen von Magnetring und Rückschluss fixiert wird. Es werden die Vorteile radial wirkender Federkräfte bzw. des Ausgleicheffektes eines Federelements ausgenutzt, ohne dass das Federelement in einem zusätzlichen Montageschritt eingebaut werden muss. Dies wird dadurch bewirkt, dass das wenigstens eine Federelement mindestens eine sich im Wesentlichen in Längsrichtung erstreckende, vom Umfang des Bauteils ausgehende Hinterschneidung umfasst, deren Querschnittsfläche zumindest teilweise quer zur radialen Erstreckung des Bauteils verläuft, wobei durch die mindestens eine Hinterschneidung ein Anlageabschnitt am Umfang des Bauteils gebildet wird, auf dem der mindestens ein Magnetring je nach Wärmeausdehnung wenigstens teilweise aufliegt.

Im Vergleich zu herkömmlich geklebten Magnetringen liegt der wesentliche Vorteile darin, dass der Ausgleich unterschiedlicher Wärmeausdehnungen über Federelemente geschieht und deshalb statt einer dicken elastischen Kleberschicht eine dünnere Kleberschicht aus nicht elastischem Kleber zur Fixierung des mindestens einem Magnetring verwendet werden kann.

Durch die in den Unteransprüchen aufgeführten Maßnahmen ist eine vorteilhafte Weiterbildung und Verbesserung der im Hauptanspruch angegebenen Anordnung möglich. Besonders vorteilhaft ist es, die Hinterschneidung als eine von der Umfangsfläche des Bauteils ausgehende Nut auszubilden, die einen in radialer Richtung gewölbten Verlauf hat. Durch die sich ergebende wirksame Länge der Nut kann die Federkraft und besonders der Ausgleichsweg des Federelements in einem großen Bereich beeinflusst werden. Dieser Effekt lässt sich verstärken, indem das wenigstens eine Federelement wenigstens eine zweite, von der Umfangsfläche des Bauteils ausgehende Nut umfasst, die parallel und gegensinnig zur mindestens ersten Nut verläuft, wobei zwischen der ersten und der zweiten Nut ein gewölbter Schenkel ausgebildet ist, an den sich der von der ersten Nut hinterschnittene Abschnitt des Bauteils anschließt. Dadurch ergibt sich auch eine symmetrische Einfederung bzw. vor allen Dingen eine radial ausgleichende Wirkung auf die unterschiedlichen Wärmeausdehnungen der unterschiedlichen Materialien.

Vorzugsweise sind mehrere am Umfang des Bauteils versetzt angeordnete Federelemente ausgebildet, wobei jeweils die ersten Nuten und die zweiten Nuten in Umfangsrichtung zueinander gleich orientiert sind. Hierbei ist es vorteilhaft, wenn der Bereich der Umfangsfläche des Bauteils zwischen der Mündung der ersten Nut eines ersten Federelements und der Mündung der zweiten Nut eines benachbarten Federelements eine geringere radiale Ausdehnung hat als die Umfangsfläche des Anlageabschnitts. Dies erlaubt die Wärmeausdehnung des nicht elastischen bzw. gefederten Umfangsanteils.

In vorteilhafter Weise verläuft die wenigstens eine erste Nut im wesentlichen mindestens teilweise parallel wenigstens zu Teilen von Flusslinien eines durch die elektrische Maschine erzeugten Magnetfelds. Dadurch wird das Erregerfeld der elektrischen Maschine nicht reduziert, was sich positiv auf die Leistung auswirkt.

Die erfindungsgemäße Anordnung ist besonders geeignet für die Verwendung in einem Rotor oder Stator einer elektrischen Maschine. Vorzugsweise ist der wenigstens eine Rückschluss im wesentlichen zylindrisch und der mindestens eine Magnetring geschlossen ausgebildet. In einer bevorzugten Weiterbildung der erfindungsgemäßen Anordnung ist die wenigstens erste Nut konkav gewölbt. Da die zweite Nut parallel zur ersten Nut verläuft, ist die zweite Nut in diesem Fall vorzugsweise auch konkav gewölbt.

Vorteilhaft ist, wenn der Rückschluss ein Paket aus Blechlaminaten ist, da die Einzelbleche gestanzt werden können. Vorzugsweise ist die Breite der Nuten in diesem Fall in etwa ein- bis dreimal so groß wie die Dicke der Blechlaminate.

Eine elektrische Maschine mit einer erfindungsgemäßen Anordnung hat daher auch eine gegenüber herkömmlichen Maschinen verbesserte Beständigkeit gegenüber Entmagnetisierung Außerdem kann gegenüber herkömmlichen Maschinen das erzeugte Reluktanzmoment während der Vorkommutierung genutzt werden, um das Drehmoment zu erhöhen, da die sogenannte D-Achsen-Induktivität größer als die sogenannte Q-Achsen-Induktivität ist.

Weitere Vorteile und vorteilhafte Weiterbildung der erfmdungsgemäßen Anordnung ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert.

Es zeigen:
Figur 1 einen Querschnitt durch eine elektrische Maschine,
Figur 2 einen vergrößerten Ausschnitt aus Figur 1 und
Figur 3 eine Vorrichtung zur Herstellung eines Pakets aus Blechlaminaten.

### Beschreibung des Ausführungsbeispiels

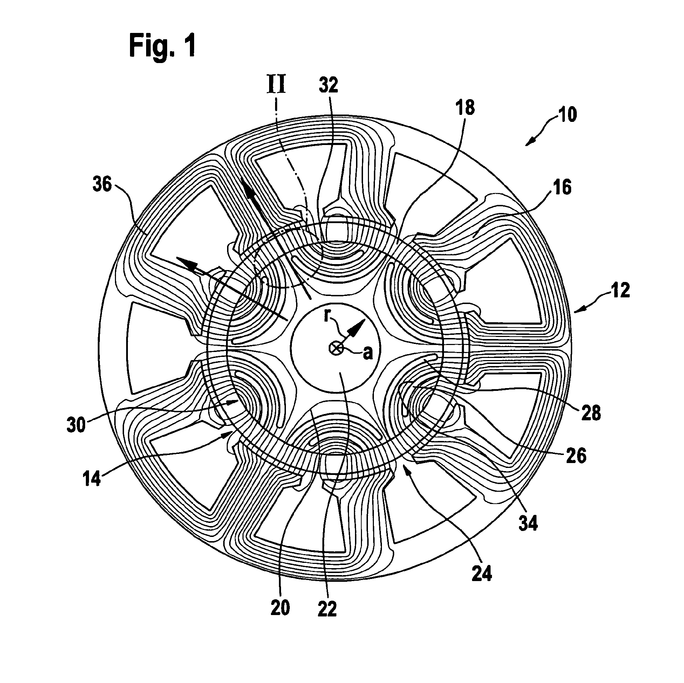

In der Figur 1 ist eine elektrische Maschine 10 vereinfacht in einem Querschnitt dargestellt. Die elektrische Maschine 10 kann ein Elektromotor, beispielsweise ein bürstenloser permanentmagneterregter Elektromotor sein. Es kann sich jedoch auch um einen Generator handeln. Die elektrische Maschine 10 umfasst einen Stator 12 und einen Rotor 14. Der Stator 12 hat einen ringförmigen Aufbau mit nach innen gerichteten Statorzähnen 16, um die in bekannter Art und Weise nicht dargestellte Wicklungen anordenbar sind. Der Rotor 14 ist im Stator 12 drehbar angeordnet. An den Stirnseiten sind in der Figur 1 nicht dargestellte Lager vorhanden. Der Rotor 14 umfasst einen ringförmigen Magneten 18 - im folgenden als Magnetring 18 bezeichnet -, der auf einem im wesentlichen zylindrischen Rückschluss 20 angeordnet ist, der seinerseits auf einer Welle 22 befestigt ist. Am Umfang 24 des Rückschlusses 20 sind Hinterschneidungen in Form von konkav, d. h. nach innen bzw. zum Zentrum des Rückschlusses 20 gewölbten Nuten 26, 28 ausgebildet. Die erste Nut 26 hat ausgehend vom Umfang 24 des Rückschlusses 20 einen Verlauf entgegen dem Uhrzeigersinn. Dies hängt natürlich davon ab, von welcher Stirnseite man auf den Rückschluss blickt. Die Nut 26, die sich in axialer Richtung a des Rückschlusses 20 erstreckt, hat somit eine Querschnittsfläche, die zumindest teilweise quer zur radialen Erstreckung r des Rückschlusses 20 verläuft. Die erste Nut 26 bildet somit eine Hinterschneidung eines Umfangsbereichs des Rückschlusses 20, der aufgrund der Hinterschneidung eine federnde Wirkung hat; es handelt sich somit um ein Federelement 30. Der dem Magnetring 18 zugewandte Bereich des Umfangs 24 des Federelements 30 ist ein Abschnitt 32, auf dem der Magnetring wenigstens teilweise je nach Wärmeausdehnung aufliegt.

Die zweite Nut 28 verläuft ausgehend vom Umfang 24 im Uhrzeigersinn bzw. gegensinnig zur ersten Nut 26. Durch den im Wesentlichen parallelen Verlauf der beiden Nuten 26, 28 ist zwischen ihnen ein gewölbter Schenkel 34 ausgebildet. Durch diesen Schenkel 34 wird die Federwirkung eines Federelementes 30 bestimmt. Außerdem wird durch den Schenkel 34 die Federwirkung eines Federelements 30 vergrößert. Bei einem Rückschluss 20, der nur eine Nut 26 aufweist, ist der Anlageabschnitt 32 dann so ausgebildet, dass dieser leicht nach außen gewölbt ist, sodass der Magnet 18 aufliegen kann, aber dennoch eine federnde Wirkung gewährleistet ist. Durch die beiden Nuten 26, 28 kann der Anlageabschnitt 32 jedoch so ausgebildet sein, dass sich der Magnet 18 in dem betroffenen Umfangsbereich an den Anlageabschnitt 32 anschmiegt.

In der Figur 1 sind auch Flusslinien 36 eines durch die elektrische Maschine 10 erzeugten Magnetfelds gezeigt. In der gezeigten Stellung wirken jeweils 3 benachbarte Statorzähne 16 mit zwei ihnen gegenüberliegenden Federelementen 30 zusammen. Die Flusslinien verlaufen in der gezeigten Stellung vom mittleren Statorzahn 16 durch die Schenkel 34 und die Anlageabschnitte 32 hin zu den beiden benachbarten Statorzähnen 16. Es ist also erkennbar, dass die Nuten 26, 28 im wesentlichen parallel zu den Flusslinien 36 verlaufen. Im gezeigten Ausführungsbeispiel handelt es sich um neun Zähne und sechs Pole. Es sind aber auch andere Zähne- und Polzahlen denkbar. Ist nur eine Nut 26 vorhanden, sind die Flusslinien 36 in diesem Bereich nur zu der einen Nut 26 parallel.

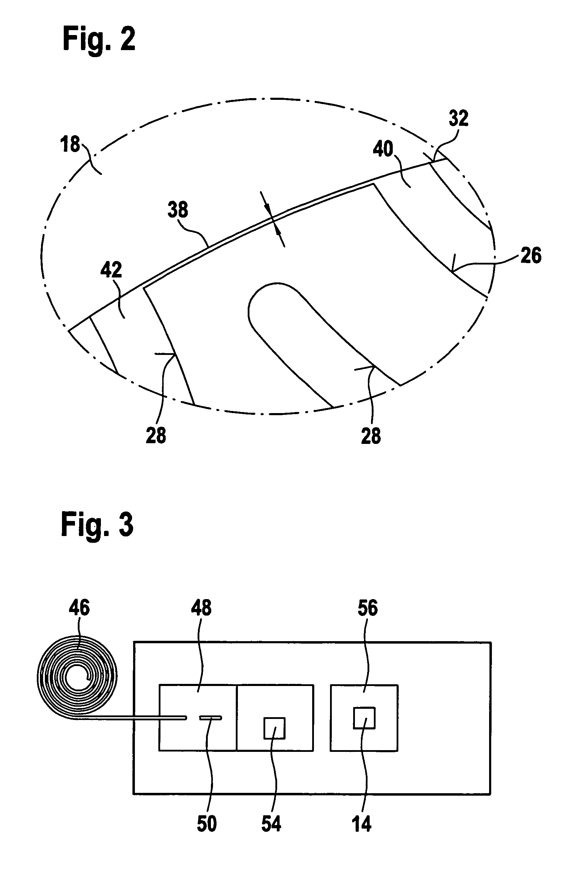

In Figur 2 ist in dem vergrößerten Ausschnitt der Figur 1 der Bereich 38 zwischen zwei Federelementen 30 vergrößert dargestellt. Der Bereich 38 des Umfangs 24 des Rückschlusses 20 zwischen der Mündung 40 der ersten Nut 26 eines ersten Federelements 30 und der Mündung 42 der zweiten Nut 28 eines benachbarten Federelements 30 hat eine geringere radiale Ausdehnung als der Anlageabschnitt 32. Das Federelement 30 wird, wenn sich der Magnetring 18 und der Rückschluss 20 unterschiedlich stark ausdehnen, um den Bereich 38 verschwenkt.

Im vorliegenden Ausführungsbeispiel ist der Rückschluss 20 ein Paket 54 aus Blechlaminaten 48. Ein jedes Blechlaminat 48 kann z.B. eine Dicke von ca. 0,5 mm haben. Die Breite der Nuten 26, 28 ist in dem Fall ein 1 mm, also im wesentlichen ca. zwei- bis dreimal so groß wie das Dicke der Blechlaminate 48. Dadurch lässt sich der Rückschluss 20 auf einer relativ einfach ausgebildeten Vorrichtung 44, die in der Figur 3 schematisch dargestellt ist, herstellen. Eine Rolle 46 mit Blechlaminat 48 wird in die Vorrichtung 44 gespeist. An einer ersten Station 49 wird das Blechlaminat 46 zu einzelnen Blechen 50 gestanzt und direkt zu einem Paket 54 zusammengefasst. An einer zweiten Vorrichtung 56, die auch Teil der Vorrichtung 44 sein kann, werden das Paket 54 und der Magnetring 18 zum Rotor 14 montiert. Hierbei sollte vorzugsweise noch eine zusätzliche Fixierung mittels Klebstoff erfolgen. Der Vorteil durch den Rückschluss 20 liegt dann darin, dass dieser Klebstoff dünner aufgetragen werden kann und nicht elastisch sein muss.

Natürlich sind auch Abwandlungen der erfindungsgemäßen Anordnung denkbar. Beispielsweise muss es sich nicht um eine gezeigte Nut 26 handeln, es kann auch genügen, wenn ein anderer Ort der Hinterschneidung vorgesehen ist. Auch kann die erfindungsgemäße Anordnung statt für einen wie im vorliegenden Ausführungsbeispiel gezeigten Innenläufer auch für einen Außenläufer vorgesehen sein. Auch kann der Rückschluss 20 ringförmig ausgebildet sein, wobei der Magnetring 18 nicht am Außenumfang, sondern am Innenumfang angeordnet ist. Die Nuten 26, 28 gehen dabei vom Innenumfang des Rückschlusses aus und haben eine konvexe, d. h. nach außen gewölbte Form. Statt des gezeigten einstückigen beziehungsweise geschlossenen Magnetrings 18 kann dieser auch mehrteilig sein, beispielsweise in Form von Ringsegmenten, die gegen ein darum angeordnetes Rohr gepresst werden.

Es ist nicht notwendig, dass es sich um einen magnetischen Rückschluss 20 handelt. Es kann sich auch um ein anderes Bauteil bzw. einen anderen Träger aus magnetisch nicht leitendem Material handeln. Beispielsweise kann damit ein Ringmagnet auf der Welle 22 befestigt werden, durch den die Drehzahl der Welle 22 ermittelt wird. Ein derartiges Bauteil oder ein derartiger Träger kann zum Beispiel auch aus Kunststoff hergestellt sein.

Das oder die Federelemente 30 verlaufen im wesentlichen in der axialen Erstreckung a. Das bedeutet, dass die Federelemente 30 sowohl geradlinig als auch schräg am Umfang 24 verlaufen. Hierzu können beispielsweise einzelne Blechlaminate 48 nach dem Ausstanzen in Umfangsrichtung versetzt zueinander zu einem Paket 54 gestapelt werden.

## Patentansprüche

1. Anordnung, insbesondere an einer elektrischen Maschine (10), zur Fixierung mindestens eines Magnetrings (18) an einem Bauteil (20), vorzugsweise einem magnetischen Rückschluss, der eine axiale und radiale Erstreckung (a, r) sowie einen Umfang (24) hat, an dem der mindestens eine Magnetring (18) mit wenigstens einem Federelement (30) zusammenwirkt, **dadurch gekennzeichnet, dass** das wenigstens eine Federelement (30) mindestens eine im wesentlichen in der axialen Erstreckung (a) verlaufende, vom Umfang (24) des Bauteils (20) ausgehende Hinterschneidung umfasst, deren Querschnittsfläche zumindest teilweise quer zur radialen Erstreckung (r) des Bauteils (20) verläuft, wobei durch die mindestens eine Hinterschneidung ein Anlageabschnitt (32) am Umfang (24) des Bauteils (20) hinterschnitten ist, auf dem der mindestens eine Magnetring (18) wenigstens teilweise je nach Wärmeausdehnung anliegt.

2. Anordnung nach Anspruch 1, **dadurch gekennzeichnet, dass** die mindestens eine Hinterschneidung eine erste, vom Umfang (24) des Bauteils (20) ausgehende Nut (26) ist, die einen gewölbten Verlauf hat.

3. Anordnung nach Anspruch 2, **dadurch gekennzeichnet, dass** das wenigstens eine Federelement (30) wenigstens eine zweite, vom Umfang (24) des Bauteils (20) ausgehende Nut (28) umfasst, die parallel und gegensinnig zur mindestens ersten Nut (26) verläuft, wobei die erste und zweite Nut (26, 28) einen gewölbten Schenkel (34) bilden, an den sich der von der ersten Nut (26) hinterschnittene Anlageabschnitt (32) des Bauteils (20) anschließt.

4. Anordnung nach Anspruch 2 oder 3, **dadurch gekennzeichnet, dass** mehrere am Umfang (24) des Bauteils (20) versetzt angeordnete Federelemente (30) ausgebildet sind, wobei die ersten Nuten (26) in Umfangsrichtung zueinander gleich orientiert sind und die zweiten Nuten (28) in Umfangsrichtung zueinander gleich orientiert sind.

5. Anordnung nach Anspruch 3 oder 4, **dadurch gekennzeichnet, dass** der Bereich (38) des Umfangs (24) des Bauteils (20) zwischen der Mündung (40) der ersten Nut (26) eines ersten Federelements (30) und der Mündung (42) der zweiten Nut (28) eines benachbarten Federelements (30) eine geringere radiale Ausdehnung hat als der Anlageabschnitt (32).

6. Anordnung nach einem der Ansprüche 2 bis 5, **dadurch gekennzeichnet, dass** die wenigstens eine erste Nut (26) im wesentlichen mindestens teilweise parallel wenigstens zu Teilen von Flusslinien (36) eines durch die elektrische Maschine (10) erzeugten Magnetfelds verläuft.

7. Anordnung nach einem der Ansprüche 1 bis 6, **dadurch gekennzeichnet, dass** das wenigstens eine Bauteil (20) und der mindestens eine Magnetring (18) einen Rotor (14) oder Stator (12) bilden.

8. Anordnung nach einem der Ansprüche 1 bis 7, **dadurch gekennzeichnet, dass** das wenigstens eine Bauteil (20) im wesentlichen zylindrisch und der mindestens eine Magnetring (18) geschlossen ausgebildet ist.

9. Anordnung nach einem der Ansprüche 2 bis 8, **dadurch gekennzeichnet, dass** wenigstens die erste Nut (26) konkav gewölbt ist.

10. Anordnung nach einem der Ansprüche 1 bis 9, **dadurch gekennzeichnet, dass** das Bauteil (20) ein Paket (54) aus Blechlaminaten (50) ist und die Breite der Nuten (26, 28) vorzugsweise in etwa ein- bis dreimal so groß wie die Dicke der Blechlaminate ist.

11. Vorrichtung (44) zur Herstellung eine Pakets (54) nach Anspruch 10.

12. Elektrische Maschine (10) mit einer Anordnung nach einem der Ansprüche 1 bis 10.
